# EUROPÄISCHE PATENTSCHRIFT

(11) **EP 2 703 115 B1**
(45) Veröffentlichungstag und Bekanntmachung des Hinweises auf die Patenterteilung: **09.10.2019**
(21) Anmeldenummer: 12182048.4
(22) Anmeldetag: 28.08.2012
(51) Int. Cl.: B23K 35/02, B23K 35/26, B23K 35/30, B23K 35/36

(54) **LOTPASTE**
SOLDERING PASTE
PÂTE À BRASER

(43) Veröffentlichungstag der Anmeldung: 05.03.2014
(73) Patentinhaber: SAXONIA Technical Materials GmbH, 63457 Hanau (DE)
(72) Erfinder: Schnee, Daniel, 63505 Langenselbold (DE); Koch, Juergen, 63457 Hanau (DE); Weber, Wolfgang, 63791 Karlstein (DE); Schimpfermann, Max, 63526 Erlensee (DE)
(74) Vertreter: Pfenning, Meinig & Partner mbB

(56) Entgegenhaltungen:
- WO-A1-03/068447
- US-A- 3 986 899
- US-A- 4 541 876
- US-A- 6 140 402

## Beschreibung

Es ist aus US 6,140,402 B eine adhäsive Paste bekannt, die mit organischem Polymer, anorganischem Füllmaterial und einer flüchtigen Flüssigkeit gebildet wird.

US 3,986,899 B betrifft eine Kupferlötpaste. Eine Metallpastenzusammensetzung ist aus US 4,541,876 B bekannt.

Bei der Herstellung von Lotpasten sind neben den Eigenschaften der als Lote verwendeten Metallpulver auch die Eigenschaften weiterer Zusatzstoffe von Interesse. Diese weisen vorteilhaft eine gute Ausbrennbarkeit bei den Löttemperaturen auf. Außerdem sind geringe Toxizität und Brandgefährlichkeit von Interesse. Ebenso sollen die Lotpasten eine gute Lagerstabilität aufweisen, eine gute Adhäsion auf dem Substrat besitzen und geeignete Eigenschaften für die gewählte Verarbeitungsweise zeigen.

Diese Aufgabe wird von einer Lotpaste gelöst, die folgende Bestandteile enthält und die Merkmale des Anspruchs 1 aufweist:
a) eine oder mehrere als Lot geeignete Metallpulver;
b) ein oder mehrere Copolymer(e), welche mindestens einen Styrol-Block und mindestens einen Block aus Ethylen, Propylen, Isopren, Butadien, deren hydrierten Äquivalenten oder deren Kombinationen aufweist
c) ein organisches Medium.

Das organische Medium ist ein bei Raumtemperatur flüssiger Kohlenwasserstoff oder Kohlenwasserstoffgemisch.

Der Kohlenwasserstoff sollte mindestens ein Alkan mit 10 bis 15 Kohlenstoffatomen sein.

Der Kohlenwasserstoff kann mindestens ein Isoalkan mit 10 bis 15 Kohlenstoffatomen enthalten.

Der Kohlenwasserstoff kann ein Gemisch aus Alkanen, Isoalkanen cyclischen Alkanen oder deren Kombinationen mit 10 bis 15 Kohlenstoffatomen sein.

Das Copolymer kann dabei ein Blockcopolymer aus Styrol und Isopren oder ein Blockcopolymer aus Styrol, Ethylen und Propylen sein.

Ein geeignetes Metallpulver sollte eine Schmelztemperatur von 1500°C oder weniger aufweisen.

Das Metall des Metallpulvers kann ausgewählt sein aus der Gruppe bestehend aus Kupfer, Zinn, Eisen, Silber Nickel, Ni76Cr14P10, Ni82,4Nr7Fe3Si4,5B3,1, Ni73,9Cr14Fe4,5Si4,5B3,1, Ni60Cr30Si4P6, Ni72Cr18Si8P2, Ni70,9Cr19Si10,1, Ag72Cu28, Ag56Cu22Zn17Sn5, Ag49Cu16Zn23Mn7,5Ni4,5, Ag64,8Cu25,2Ti10, Ag90Ti10, Cu80P5Ag15, Cu92P8, Cu76Sn15Ni4P5, Cu78,5Sn9,3Ni5,7P6,5 und deren Kombinationen.

Es sind 0,5 Gew.-% bis 1,5 Gew.-% der Komponente b), des Copolymers enthalten.

Es kann mindestens ein weiteres Polymer, welches von dem Copolymer verschieden ist, enthalten sein.

Es kann mindestens ein Flußmittel enthalten sein.

Es sind 6 Gew.-% bis 16 Gew.-% des organischen Mediums enthalten.

Es können auch Zusatz- und Hilfsstoffe ausgewählt aus der Gruppe bestehend aus Oxidationsmittel, nichtflüchtige, sauerstoffhaltige Verbindungen, organische Oxide, organische Peroxide, Polyether, Thixotropiermittel und deren Kombinationen enthalten sein.

Lotpaste nach Punkt 1, wobei Das Copolymer kann SEPS (Poly(Styrol-block-Isopren-block-Styrol)) sein.

Das Copolymer weist einen Styrolgehalt von mindestens 30% auf.

Das Copolymer kann ein SEPS sein und ein Verhältnis von Styrol zu Isopren von etwa 1:2 bis etwa 1:6 aufweisen.

Das Copolymer kann ein Gewichtsmittel M_{w} von 60000 g/mol bis 90000 g/mol aufweisen.

Das Copolymer kann ein Zahlenmittel Mₙ von 60000 g/mol bis 90000 g/mol.

Eine Struktur, die eine Schicht der Lotpaste aufweist, kann auf einem Substrat ausgebildet sein.

Das Substrat kann mindestens eine Metallschicht aufweisen.

Ein gelöteter Gegenstand kann durch Aufbringen von Lotpaste auf ein Substrat, Aufbringen eines Verbindungspartners auf das Substrat, wobei der Verbindungspartner Kontakt zur Lotpaste besitzt, und Wärmebehandeln erhalten werden.

Bei einem Verfahren zum Löten von einem Substrat mit einem Verbindungspartner, sollen die Schritte
i) Bereitstellen eines Substrates, eines Verbindungspartners und einer Lotpaste enthaltend
   a) eine oder mehrere als Lot geeignete Metallpulver;
   b) ein oder mehrere Copolymer(e), welche mindestens einen Styrol-Block und mindestens einen Block aus Ethylen, Propylen, Isopren, Butadien, deren hydrierten Äquivalenten oder deren Kombinationen aufweist/aufweisen;
   c) ein organisches Medium;
ii) Aufbringen der Lotpaste auf das Substrat, den Verbindungspartner oder beides;
iii) Gegebenenfalls Trocknen der Lotpaste;
iv) Kontaktieren des Substrates und des Verbindungspartners miteinander, so dass Lotpaste zumindest teilweise zwischen Substrat und Verbindungspartner angeordnet ist, und
v) Wärmebehandeln von Substrat, Verbindungspartner und Lotpaste oder deren Kombinationen durchgeführt werden.

Eine Struktur, welche eine auf ein Substrat aufgebrachte teilweise oder vollständige Schicht bildet, enthält
a) eine oder mehrere als Lot geeignete Metallpulver;
b) ein oder mehrere Copolymer(e), welche mindestens einen Styrol-Block und mindestens einen Block aus Ethylen, Propylen, Isopren, Butadien, deren hydrierten Äquivalenten oder deren Kombinationen.

### Detaillierte Beschreibung der Erfindung

Die vorliegende Erfindung betrifft eine Lotpaste, enthaltend eine oder mehrere als Lot geeignete Metallpulver, ein oder mehrere Copolymere, welche mindestens einen Styrol-Block und mindestens einen Block aus Ethylen, Propylen, Isopren, Butadien, deren hydrierten Äquivalenten oder deren Kombinationen aufweist und ein organisches Medium.

Als Lot geeignete Metallpulver sind im Allgemeinen die Pulver der in der Lotpaste zu verwendenden Lotlegierungen. Insbesondere handelt es sich hierbei um Hartlote, üblicherweise um Nickelbasislote, Kupferbasislote, Silberbasislote und deren Kombinationen. Die Korngrößen und Korngrößenverteilungen können nach der gewünschten Anwendung ausgewählt werden. Oft werden Silber- Nickel- oder Kupferbasislote mit mittleren Korngrößen von kleiner als 150 µm, oder kleiner als 100 µm oder kleiner als 63 µm. bestimmt mittels statischer Lichtstreuung, eingesetzt. Der d90-Wert beträgt von etwa 80 µm bis etwa 30 µm, +- 7µm, oder von etwa 60 µm bis etwa 40 µm +- 7µm, beispielsweise 55 +- 7µm, bestimmt mittels statischer Lichtstreuung. Der D50-Wert beträgt von etwa 10 µm bis etwa 60 µm, oder von 30 µm bis etwa 45 µm, +- 7µm, beispielsweise 35 +-7µm, bestimmt mittels statischer Lichtstreuung. Der D50-Wert kann in Sonderfällen auch von etwa 2,9 µm bis 20 µm reichen.

### Block =

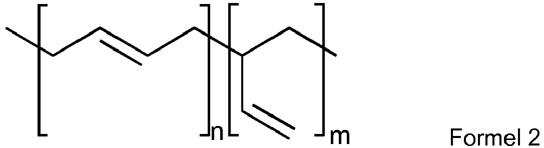

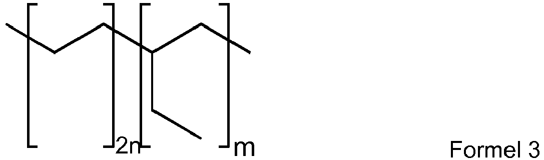

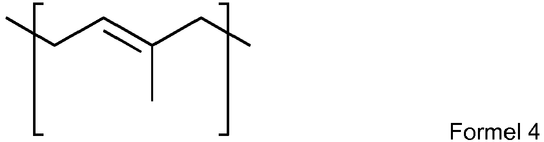

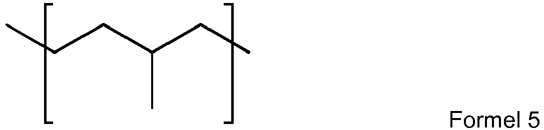

Wird der "Block" in Formel 1a ersetzt durch Formel 2, so wird Poly(styrol-block-butadien), SB erhalten.

Wird der "Block" in Formel 1b ersetzt durch Formel 2, so wird Poly(styrol-block-butadien-block-styrol), SBS erhalten. Wird dieses Polymer hydriert, so erhält man SEBS, dessen Struktur der Formel 1b entspricht, wobei der "Block" in Formel 1 ersetzt ist durch Formel 3. Bei den angegebenen Formeln für SEBS bzw. SBS zeigen die Indices n und m die unterschiedlichen Anteile an 1,4-verknüpftem und 1,2-verknüpftem Butadien. Die Ziffern n und m können gleich oder verschieden sein. Das Verhältnis von n und m zueinander zeigt das Verhältnis zwischen 1,2- und 1,4-Verknüpfung an und kann bei der Wahl der Herstellungsbedingungen kontrolliert werden.

Wird der "Block" in Formel 1a ersetzt durch Formel 4, so wird Poly(styrol-block-isopren), SI erhalten. Wird der "Block" in Formel 1b ersetzt durch Formel 4, so wird Poly(styrol-block-isopren-block-styrol), SIS, erhalten. Wird dieses Polymer hydriert, so erhält man SEPS, dessen Struktur der Formel 1b entspricht, wobei der "Block" in Formel 1b ersetzt ist durch Formel 5. Spezifischer ist die Struktur von SEPS in Formel 6 dargestellt.

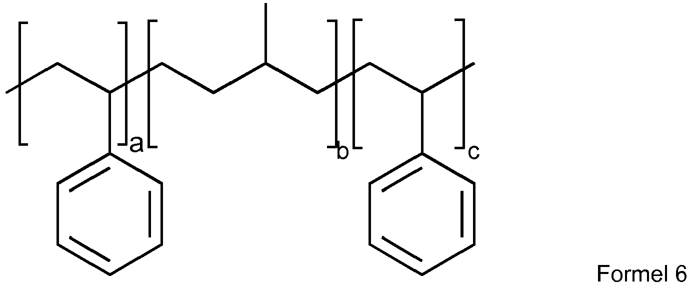

Gut geeignet als Bestandteil der Lotpaste ist beispielsweise SEPS mit einem Verhältnis von Styrol zu Isopren von etwa 1:2 bis etwa 1:6, oder von etwa 1:3 bis etwa 1:5, oder von etwa 1:4 bis etwa 1:5,5. Das Verhältnis von Styrol zu Isopren wird aus der Strukturformel bestimmt durch das Verhältnis der Summe von a und c (Styrolblöcke) zu b (hydrierte Isoprenblöcke). Aus dem Polymer kann das Verhältnis durch Kernresonanzspektrometrie bestimmt werden. Gut geeignet sind Copolymere, die ein Gewichtsmittel M_{w} von 60000 g/mol bis 90000 g/mol, oder von 70000 g/mol bis 80000 g/mol aufweisen. Gut geeignet sind Copolymere, die ein Zahlenmittel Mₙ von 60000 g/mol bis 90000 g/mol, oder von 70000 g/mol bis 80000 g/mol aufweisen. Gut geeignet sind Copolymere, die eine Polydispersität Q im Bereich von 1,01 bis 1,05 aufweisen.

Als dritte Komponente c) weist die Lotpaste ein organisches Medium auf. Im Prinzip können alle geeigneten organischen Lösemittel verwendet werden, welche bei den Löttemperaturen im Wesentlichen rückstandslos verdampfen oder verbrennen. Hierbei sind Lösemittel besonders geeignet, die keine übermäßige Rußentwicklung zeigen, beispielsweise Aceton, Ether oder Kohlenwasserstoffe bzw. Kohlenwasserstoffgemische, welche bei Raumtemperatur flüssig sind. Im Allgemeinen wird diese Bedingung von Kohlenwasserstoffen erfüllt, welche 10 bis 15 Kohlenstoffatome aufweisen. Der Kohlenwasserstoff kann mindestens ein Isoalkan mit 10 bis 15 Kohlenstoffatomen enthalten. Ungesättigte Verbindungen und Aromaten neigen dabei stärker zur Rußentwicklung. Im Allgemeinen gut geeignet als organisches Medium sind Alkane und Gemische von Alkanen, zum Beispiel Gemische von Alkanen, die im Wesentlichen 10 bis 15 Kohlenstoffatome aufweisen. Dies können auch Gemische aus n-Alkanen, Isoalkanen und Cycloalkanen sein, oder Gemische aus n-Alkanen, iso-Alkanen und cyclischen Verbindungen, oder iso-Alkane. So sind beispielsweise iso-Alkane mit 11 bis 13 Kohlenstoffatomen, oder Gemische aus n-Alkanen, iso-Alkanen und cyclischen Verbindungen mit im Wesentlichen 11 bis 14 Kohlenstoffatomen gut geeignet. Diese können auch eingesetzt werden, wenn sie weniger als 2 Gew.-% Aromaten enthalten. Beispielsweise können auch die Kohlenwasserstoffe eingesetzt werden, welche als Petrolether 40-60 oder Petrolether 60-80 bezeichnet werden. Abhängig von der für eine bestimmte Anwendung benötigten Viskosität ist das organische Medium in Mengen von etwa 4 Gew.-% bis etwa 20 Gew.-%, oder von etwa 5 Gew.-% bis etwa 15 Gew.-%, oder von etwa 6 Gew.-% bis etwa 14, 4 Gew.-%, oder von etwa 6,5 Gew.-% bis etwa 13, 3 Gew.-%, oder von etwa 7 Gew.-% bis etwa 11,7 Gew.-% in der Lotpaste enthalten.

Die Lotpaste kann auch weitere Bestandteile enthalten. So kann die Lotpaste auch bis zu 2,7 Gew.-% eines weiteren Polymeren enthalten, welches von der Komponente b) verschieden ist. Für diesen Zweck gut geeignet sind im Allgemeinen Acrylate, wie Polymethylmethacrylat, Polymethylacrylat, Polyethylmetacrylat, Polyethylacrylat und dergleichen. Ebenso können EPDM, Polysiopren , Polyisobutylen, ganz oder teilweise hydrierte Kohlenwasserstoffharze oder Polyolefine wie Polyethylen eingesetzt werden. Diese Materialien zeigen oft auch in Mengen von einem Gew.-% oder weniger eine Wirkung. Es kann also beispielsweise etwa 0,4 Gew.-% bis 1 Gew.-%, oder von etwa 0,6 Gew.-% bis etwa 0,9 Gew.-% von Materialien wie Polyisobutylen eingesetzt werden. Statt Polyisobutylen können auch Polyisopren, EPDM oder die übrigen oben genannten Polymere eingesetzt werden, gegebenenfalls auch in Kombination mit Polyisobutylen oder miteinander. Durch den Zusatz des zweiten Polymers können Eigenschaften der Lotpaste modifiziert werden, wie zum Beispiel die Adhäsion zu bestimmten Substraten, Viskosität oder Ausbrennverhalten.

Außerdem kann die Lotpaste noch weitere Zusatz- und Hilfsstoffe enthalten um die Eigenschaften für bestimmte Anwendungen zu modifizieren. Beispielsweise können Oxidationsmittel zugesetzt werden, um das Abbrandverhalten zu verbessern. Für den gleichen Zweck können auch nichtflüchtige, sauerstoffhaltige Verbindungen eingesetzt werden, wie beispielsweise nichtflüchtige organische Oxide und Peroxide, oder Polyether. Auch Thixotropiermittel können zugesetzt werden, um die Viskosität der Lotpaste in weiten Grenzen zu regulieren.

Die Lotpaste kann außerdem ein oder mehrere Flußmittel enthalten. Dies sind oft Bor oder Fluor basierende Verbindungen, welche einzeln oder in Mischungen der Lotpaste zugesetzt werden können.

Eine weitere Ausführungsform betrifft ein Verfahren zum Löten von einem Substrat mit einem Verbindungspartner, umfassend die Schritte
i) Bereitstellen eines Substrates, eines Verbindungspartners und einer Lotpaste enthaltend
   a) eine oder mehrere als Lot geeignete Metallpulver;
   b) ein oder mehrere Copolymere, welche mindestens einen Styrol-Block und mindestens eine Block aus Ethylen, Propylen, Isopren, Butadien, deren hydrierten Äquivalenten oder deren Kombinationen aufweist;
   c) ein organisches Medium;
ii) Applizieren der Lotpaste auf das Substrat, den Verbindungspartner oder beides;
iii) Gegebenenfalls Trocknen der Lotpaste
iv) Kontaktieren des Substrates und des Verbindungspartners miteinander,so daß Lotpaste zumindest teilweise zwischen Substrat und Verbindungspartner angeordnet sind, und
v) Wärmebehandeln von Substrat, Verbindungspartner und Lotpaste oder deren Kombinationen.

In diesem Verfahren werden das Substrat und ein Verbindungspartner bereit gestellt. Hierzu werden ein geeignetes Substrat oder ein geeigneter Verbindungspartner, wovon oft zumindest das Substrat, der Verbindungspartner oder beide entweder aus einem Metall bestehen oder metallisiert sind, also zumindest eine Metallschicht aufweist, mit der Lotpaste an den gewünschten Stellen versehen. Hierzu wird ein geeignetes Substrat, welches meist entweder aus einem Metall besteht oder metallisiert ist, also oft zumindest eine Metallschicht aufweist, mit der Lotpaste an den gewünschten Stellen versehen. Abhängig vom verwendeten Lot können jedoch auch nichtmetallische Substrate oder Verbindungspartner eingesetzt werden, beispielsweise Keramiken. Das Metall des Substrates oder des Verbindungspartners kann im Prinzip jede lötbare Oberfläche sein, was gegebenenfalls die Oberflächenbehandlung zur Bewirkung der Lötbarkeit einschließt. Beispielsweise geeignete Oberflächenbehandlungen sind Metallisierung oder Galvanisieren, wodurch besser lötbare oder benetzbare Metallschichten aufgebracht werden können, aber auch Beizen der Oberfläche, um Oxide und Verzunderungen zu entfernen, was beispielsweise mit Säuren oder Laugen bewirkt werden kann.

Die Lotpaste kann erhalten werden durch die übliche Herstellungsweise für Lotpasten. Hierzu wird das organische Medium in einem Behälter vorgelegt, auf eine Temperatur von im Allgemeinen etwa 20°C bis etwa 100°C, oder etwa 30°C bis etwa 80°C, oder etwa 40°C bis etwa 60°C, oder etwa 40°C bis etwa 50°C, oder etwa 60°C bis etwa 80°C gebracht und gehalten und unter Rühren nacheinander das Copolymer, weitere Zusatzstoffe und das Lotpulver zugegeben. Für das Einrühren des Copolymers und der Zusatzstoffe sind je nach Ansatzgröße meist Rührzeiten von einer Stunde bis einem Tag, insbesondere 12 bis 24 Stunden ausreichend. Die Lotpaste kann aber auch in mehrstufigen Verfahren erhalten werden. Beispielsweise kann das Einrühren des Copolymers und der Zusatzstoffe wie oben beschrieben erfolgen, die Zugabe des Lotpulvers später erfolgen, um die Lagerzeit zu verringern und die Haltbarkeit der Lotpaste zu erhöhen. Die Zugabe des Metallpulvers kann -gegebenenfalls unter Heizen oder Kühlen- bei etwa 10°C bis etwa 100°C erfolgen. Anschließend ist die Lotpaste bereit für Verpackung oder Verarbeitung.

Die Lotpaste wird auf das Substrat, den Verbindungspartner oder beide aufgetragen. Dies kann je nach Anwendung eine vollständige oder teilweise Beschichtung bedeuten. Zur vollständigen Beschichtung ist beispielsweise eine Tauchbeschichtung des Substrates eine mögliche Vorgehensweise. Auch ein Rollenauftrag (oft als "Rollercoating" bezeichnet) kann eingesetzt werden, insbesondere dann wenn die zu beschichtenden Bereiche des Substrates eben sind. Für vollständigen und teilweisen Auftrag von Lotpaste sind Sprühen oder Dispensen geeignet. Für teilweisen Auftrag kann das Substrat mit Schablonen abgedeckt werden, so daß der Sprühnebel nur auf einen Teil des Substrates trifft.

Optional kann die aufgebrachte Lotpaste getrocknet werden. Die Trocknung kann durch eine Wärmebehandlung unterhalb der Glastemperatur der in der Lotpaste verwendeten Polymere durchgeführt werden, aber auch durch ausreichend langes Aufbewahren an der Luft, wobei ausreichende Frischluftzufuhr und Brauchluftabfuhr empfehlenswert ist, auch, um Gefahren durch Lösemitteldämpfe zu vermeiden. Das Trocknen kann hilfreich sein wenn die mit Lotpaste versehenen Teile (Substrat, Verbindungspartner oder beide) zwischengelagert und erst später weiter verarbeitet werden, beispielsweise bei Löten im Batch oder Lohnfertigung. Bei der sofortigen Weiterverarbeitung ist die Trocknung normalerweise nicht erforderlich.

Das Substrat und der Verbindungspartner werden dann miteinander in Kontakt gebracht, so daß Lotpaste zumindest teilweise zwischen Substrat und Verbindungspartner angeordnet ist. Auf diese Weise wird sicher gestellt, daß die Lotpaste sich entweder da befindet, wo die spätere Lötverbindung erzeugt werden soll. Die Lotpaste kann aber auch so angeordnet werden, daß das Lot erst beim Schmelzen an den gewünschten Ort fließt, beispielsweise indem es durch den Kapillareffekt in einen Spalt zwischen dem Substrat und dem Verbindungspartner hineingezogen wird.

Anschließend werden die miteinander kontaktierten Substrate und Verbindungspartner wärmebehandelt. Die Wärmebehandlung dient verschiedenen Zwecken. Wenn die Lotpaste noch nicht getrocknet ist, wird hierdurch eine Verdampfung des organischen Mediums und damit eine Trocknung bewirkt. Außerdem werden organische Bestandteile der Lotpaste, wie Polymere oder organische Hilfsstoffe, entfernt ("ausgebrannt"). Schließlich bewirkt die Wärmebehandlung das Schmelzen des Lotes, welches als Metallpulver vorliegt, und damit die Bildung der Lötverbindung. Die Wärmebehandlung muß daher zumindest teilweise bei der Schmelztemperatur des als Lot geeigneten Metallpulvers durchgeführt werden, für eine ausreichende Zeit zum Erzielen der Lötverbindung. Üblicherweise wird die Temperatur allmählich im Laufe der Zeitdauer bis zur notwendigen Temperatur erhöht, bei dieser Temperatur gehalten und anschließend wieder abgekühlt. Dies kann in einem Ofen durch Aufheizen und anschließendes Abkühlen bewirkt werden, oder durch Transport durch einen Tunnelofen mit einem eingestellten Temperaturprofil. Die Atmosphäre in dem verwendeten Ofen kann in Abhängigkeit von den zu lötenden Materialien und des aus welchen das Substrat besteht, der Zusammensetzung des als Lot geeigneten Metallpulvers gewählt werden. Bewährt haben sich inerte oder reduzierende Atmosphären, Vakuum, aber auch Luft. Nach der Wärmebehandlung wird das Produkt erhalten, was dann gegebenenfalls weiterverarbeitet werden kann, wie durch Montage in den vorgesehenen Produkten, mechanische Nachbearbeitung wie Schleifen, Schneiden oder andere Nachbearbeitungsschritte.

Eine weitere Ausführungsform betrifft einen gelöteten Gegenstand, erhältlich durch Aufbringen der Lotpaste auf ein Substrat, Aufbringen eines Verbindungspartners auf das Substrat, wobei der Verbindungspartner Kontakt zur Lotpaste besitzt, und Wärmebehandeln. Eine weitere Ausführungsform betrifft eine Struktur, enthaltend eine Schicht der Lotpaste auf einem Substrat.

Hierzu wird ein geeignetes Substrat, welches meist entweder aus einem Metall besteht oder metallisiert ist, also oft zumindest eine Metallschicht aufweist, mit der Lotpaste an der gewünschten Stellen versehen. Abhängig vom verwendeten Lot können jedoch auch nichtmetallische Substrate eingesetzt werden, beispielsweise Keramiken. Das Metall des Substrates kann im Prinzip jede lötbare Metalloberfläche sein, was gegebenenfalls eine Oberflächenbehandlung der Metallschicht zur Bewirkung der Lötbarkeit einschließt; hierbei sind wie oben beschrieben insbesondere Metallisieren, Galvanisieren oder Beizen geeignet.

Das Substrat wird durch eine geeignete Vorgehensweise mit der Lotpaste versehen. Dies kann je nach Anwendung eine vollständige oder teilweise Beschichtung bedeuten. Zur vollständigen Beschichtung ist beispielsweise eine Tauchbeschichtung des Substrates eine mögliche Vorgehensweise. Auch ein Rollenauftrag (oft als "Rollercoating" bezeichnet) kann eingesetzt werden, insbesondere dann wenn die zu beschichtenden Bereiche des Substrates eben sind. Für vollständigen und teilweisen Auftrag von Lotpaste sind Sprühen oder Dispensen geeignet. Für teilweisen Auftrag kann das Substrat mit Schablonen abgedeckt werden, so daß der Sprühnebel nur auf einen Teil des Substrates trifft. Nach dem Auftrag kann die Struktur optional getrocknet werden, was insbesondere bei Lagerung oder Versand solcher Strukturen sinnvoll sein kann. Hierdurch entsteht eine Struktur, welche eine auf das Substrat aufgebrachte, teilweise oder vollständige Schicht enthaltend
a) eine oder mehrere als Lot geeignete Metallpulver;
b) ein oder mehrere Copolymerer, welche mindestens einen Styrol-Block und mindestens eine Block aus Ethylen, Propylen, Isopren, Butadien, deren hydrierten Äquivalenten oder deren Kombinationen
aufweist.

### Beispiele

Das Lösemittel, ein Gemisch aus C11-C14 Alkanen (Gemisch aus n-, iso- und cyclischen Alkanen (CAS-Nr. 64742-47-8) 178g (192g ohne Einsatz von Polyisobutylen) wurde in einen Stahltopf (500 ml) eingewogen, auf einer elektrischen Heizplatte angeordnet und ein Rührwerk von oben eingetaucht, so daß das Rührelement (Dissolverscheibe) ca. einen Zentimeter in die Flüssigkeit eintaucht. Zur Temperaturkontrolle wurde ein Thermoelement ebenfalls etwa einen Zentimeter eingetaucht, die Zieltemperatur in den Temperaturregler eingegeben und das Lösemittel auf die gewünschte Temperatur erwärmt. Es wurden 10g Copolymer (8g ohne Polyisobutylen) und gegebenenfalls 12g Polyisobutylen abgewogen und nacheinander zugegeben. Es wurde ca. 60 Minuten nach dem Auflösen der Polymere nachgerührt. Danach wurde die Heizung abgestellt und unter Rühren auf Raumtemperatur abgekühlt, wobei die Rührerdrehzahl an die steigende Viskosität angepaßt wurde. Nach dem Abkühlen wird eine Menge von 75g (in einem Stahltopf (500 ml) vorgelegt und ein Rührwerk von oben eingetaucht, so daß das Rührelement (Dissolverscheibe) bis ca. einen Zentimeter über dem Topfboden in die Flüssigkeit eintaucht. Unter Rühren wurden 425g Kupferpulver allmählich zugegeben und nach Abschluß der Zugabe noch ca. 2 Minuten nachgerührt und anschließend zur Bestimmung des Absetzverhaltens in einen Messzylinder gefüllt und dieser verschlossen. Das Absetzverhalten wird durch Auftreten einer Separationslinie zwischen Binder und Paste (klar-rötlich) bestimmt.

Die Pasten hatten stets einen Gehalt von 85 Gew.-% Kupferpulver. Die Paste enthielt weiter 0,6 Gew.-% Copolymer und 14,4 Gew.-% Lösemittel, bzw. bei Verwendung von Polyisobutylen 0,8 Gew.-% Copolymer, 0,9 Gew.-% Polyisobutylen und 13,3 Gew.-% Lösemittel. Die verwendeten Copolymere und das Absetzverhalten sind in der folgenden Tabelle aufgeführt.

### Legende:

*= Polymer mit 2% Succinsäureanhydrid modifiziert; #= Polymer verzweigt; Absetzverhalten: ++ länger als eine Woche ohne Absetzen ,+ länger als 3 Tagen ohne Absetzen, O länger als ein Tag ohne Absetzen, - Weniger als 12 Stunden ohne Absetzen

| Copolymer | Polyisobutylen | Absetzverhalten | Temperatur / °C |
|---|---|---|---|
| | Ja/nein | | |
| SEPS, Styrolgehalt 37% | Ja | ++ | 50 |
| SEPS, Styrolgehalt 37% | Nein | ++ | 50 |
| SEBS, Styrolgehalt 30% | Ja | O | 50 |
| SEBS, Styrolgehalt 30% | Nein | O | 50 |
| SEBS, Styrolgehalt 13% | Ja | O | 58 |
| SEBS, Styrolgehalt 13% | Nein | O | 58 |
| SEPS Styrolgehalt 28% | Ja | O | 56 |
| SEPS Styrolgehalt 28% | Nein | O | 56 |
| SEPS Styrolgehalt 21% | Ja | O | 53 |
| SEPS Styrolgehalt 21% | Nein | O | 53 |
| SEBS, Styrolgehalt 30%*, | Ja | + | 58 |
| SEBS, Styrolgehalt 30%* | Nein | + | 58 |
| SB, Styrolgehalt 30%#, | Ja | O | 58 |
| SB, Styrolgehalt 30%#, | Nein | O | 58 |
| SIS, Styrolgehalt 15% | Ja | + | 51 |
| SIS, Styrolgehalt 15% | Nein | + | 51 |
| SB, Styrolgehalt 17%, | Ja | O | 51 |
| SB, Styrolgehalt 17%, | Nein | O | 51 |

Mit den Lötpasten wurden zur Bestimmung des Ausbrennverhaltens Lötversuche durchgeführt. Messingstäbe mit rechteckigem Querschnitt wurden hierzu mit den Lotpasten beschichtet und ohne Trocknung in einem Vakuumlötofen mit einer Bauteiltemperatur von 1120°C im Vakuum wärmebehandelt. Nach dem Abkühlen wurden die so erhaltenen Proben begutachtet. Das Lot war bei allen Proben metallisch blank, war vollständig aufgeschmolzen und hatte das Substrat gleichmäßig benetzt. Rußentwicklung oder schwarze Rückstände konnten in keinem Fall beobachtet werden.

## Patentansprüche

1. Lotpaste enthaltend
a) eine oder mehrere als Lot geeignete Metallpulver;
b) 0,5 Gew.-% bis 1,5 Gew.-% ein oder mehrere Copolymere, welche mindestens einen Styrol-Block und mindestens einen Block aus Ethylen, Propylen, Isopren, Butadien, deren hydrierten Äquivalenten oder deren Kombinationen aufweist, welches ein Blockcopolymer aus Stryrol und Isopren oder ein Blockcopolymer aus Styrol, Ethylen und Propylen ist und einen Styrolgehalt von mindestens 30 % besitzt;
c) 6 Gew.-% bis 16 Gew.-% eines bei Raumtemperatur flüssigen Kohlenwasserstoffs oder Kohlenwasserstoffgemischs;
d) mindestens ein weiteres Polymer, welches von dem Copolymer b) verschieden und in Mengen von bis zu 2,7 Gew.-% vorhanden ist.

2. Lotpaste nach Anspruch 1, wobei das Copolymer b) ein Triblockcopolymer des Typs SBS, Poly(Styrol-block=Butadien-block-Styrol) oder SIS, Poly(Styrol-block-Isopren-block-Styrol) oder deren hydrierte Äquivalente SEBS oder SEPS ist.

3. Lotpaste nach Anspruch 1 oder 2, wobei der Kohlenwasserstoff ein Gemisch aus Alkanen, Isoalkanen, zyklischen Alkanen oder deren Kombinationen mit 10 bis 15 Kohlenstoffatomen ist.

4. Lotpaste nach einem der Ansprüche 1 bis 3, wobei das Copolymer SEPS (Poly(Styrol-block-Isopren-block-Styrol)) ist.

5. Lotpaste nach einem der Ansprüche 1 bis 4, wobei das als Lot geeignete Metallpulver ein Metallpulver mit einer Schmelztemperatur von 1500°C oder weniger ist.

6. Lotpaste nach Anspruch 1 oder 5, wobei das Metall des Metallpulvers ausgewählt ist aus der Gruppe bestehend aus Kupfer, Zinn, Eisen, Silber, Nickel, Ni76Cr14P10, Ni82,4Nr7Fe3Si4,5B3,1, Ni73,9Cr14Fe4,5Si4,5B3,1, Ni60Cr30Si4P6, Ni72Cr18Si8P2, Ni70,9Cr19Si10,1, Ag72Cu28, Ag56Cu22Zn17Sn5, Ag49Cu16Zn23Mn7,5Ni4,5, Ag64,8Cu25,2Ti10, Ag90Ti10, Cu80P5Ag15, Cu92P8, Cu76Sn15Ni4P5, Cu78,5Sn9,3Ni5,7P6,5 und deren Kombinationen.

7. Lotpaste nach Anspruch 1, wobei als Komponente d), dem Polymer, das von Komponente b) verschieden ist, Acrylate, ganz oder teilweise hydrierte Kohlenwasserstoffharze oder Polyolefine eingesetzt werden.

8. Lotpaste nach einem der Ansprüche 1 bis 7, wobei als Komponente d), als Polymer, das von Komponente b) verschieden ist, Polymethylmethacrylat, Polymethylacrylat, Polyethylmetacrylat, Polyethylacrylat EPDM, Polyisopren, Polyisobutylen oder Polyethylen eingesetzt wird

9. Lotpaste nach einem der Ansprüche 1 bis 8, enthaltend Zusatz- und Hilfsstoffe ausgewählt aus der Gruppe bestehend aus Oxidationsmittel, Flußmittel, nichtflüchtige, sauerstoffhaltige Verbindungen, organische Oxide, organische Peroxide, Polyether, Thixotropiermittel und deren Kombinationen.

10. Eine Struktur, enthaltend eine Schicht der Lotpaste nach einem der vorstehenden Ansprüche auf einem Substrat.

11. Ein gelöteter Gegenstand, erhältlich durch Aufbringen von Lotpaste nach Anspruch 1 auf ein Substrat, Aufbringen eines Verbindungspartners auf das Substrat, wobei der Verbindungspartner Kontakt zur Lotpaste besitzt, und Wärmebehandeln.

12. Verfahren zum Löten von einem Substrat mit einem Verbindungspartner, umfassend die Schritte
i) Bereitstellen eines Substrates, eines Verbindungspartners und einer Lotpaste gemäß einem der Ansprüche 1 bis 9;
ii) Aufbringen der Lotpaste auf das Substrat, den Verbindungspartner oder beides;
iii) Gegebenenfalls Trocknen der Lotpaste
iv) Kontaktieren des Substrates und des Verbindungspartners miteinander, so dass Lotpaste zumindest teilweise zwischen Substrat und Verbindungspartner angeordnet ist, und
v) Wärmebehandeln von Substrat, Verbindungspartner und Lotpaste oder deren Kombinationen.

## Claims

1. Solder paste containing
a) one or more metal powders suitable as solder;
b) 0.5 wt.-% to 1.5 wt.-% of one or more copolymers comprising at least one styrene block and at least one block of ethylene, propylene, isoprene, butadiene, hydrogenated equivalents thereof or combinations thereof which is a block copolymer of styrene and isoprene or a block copolymer of styrene, ethylene and propylene and has a styrene content of at least 30%;
c) 6 wt.-% to 16 wt.-% of a hydrocarbon or hydrocarbon mixture liquid at room temperature
d) at least one further polymer distinct from the copolymer b) and present in amounts of up to 2.7 wt.-%.

2. Solder paste according to Claim 1, wherein the copolymer b) is a triblock copolymer of the type SBS, poly(styrene-block-butadiene-block-styrene), or SIS, poly(styrene-block-isoprene-block-styrene), or their hydrogenated equivalents SEBS or SEPS.

3. Solder paste according to Claim 1 or 2, wherein hydrocarbon is a mixture of alkanes, isoalkanes, cyclic alkanes or combinations thereof having 10 to 15 carbon atoms.

4. Solder paste according to any of Claims 1 to 3, wherein the copolymer is SEPS (poly(styrene-block-isoprene-block-styrene)).

5. Solder paste according to any of Claims 1 to 4, wherein the metal powder suitable as solder is a metal powder having a melting temperature of 1500°C or less.

6. Solder paste according to Claim 1 or 5, wherein the metal of the metal powder is selected from the group consisting of copper, tin, iron, silver, nickel, Ni76Cr14P10, Ni82,4Nr7Fe3Si4,5B3,1, Ni73, 9Cr14Fe4, 5Si4, 5B3, 1, Ni60Cr30Si4P6, Ni72Cr18Si8P2, Ni70, 9Cr19Si10, 1, Ag72Cu28, Ag56Cu22Zn17Sn5, Ag49Cu16Zn23Mn7, 5Ni4, 5, Ag64, 8Cu25, 2Ti10, Ag90Ti10, Cu80P5Ag15, Cu92P8, Cu76Sn15Ni4P5, Cu78,5Sn9,3Ni5,7P6,5 and combinations thereof.

7. Solder paste according to Claim 1, wherein as component d), the polymer distinct from component b), acrylates, fully or partially hydrogenated hydrocarbon resins or polyolefins are employed.

8. Solder paste according to any of Claims 1 to 7, wherein as component d), as polymer distinct from component b), polymethyl methacrylate, polymethyl acrylate, polyethylmethacrylate, polyethyl acrylate EPDM, polyisoprene, polyisobutylene or polyethylene is employed.

9. Solder paste according to any of Claims 1 to 8, containing additive and auxiliary substances selected from the group consisting of oxidizing agents, flow agents, non-volatile, oxygen-containing compounds, organic oxides, organic peroxides, polyethers, thixotropic agents and combinations thereof.

10. A structure containing a layer of the solder paste according to any of the preceding claims atop a substrate.

11. A soldered article obtainable by applying solder paste according to Claim 1 atop a substrate, applying a connection partner atop the substrate, wherein the connection partner is in contact with the solder paste, and heat treating.

12. A method for soldering a substrate with a connection partner, comprising the steps of
i) providing a substrate, a connection partner and a soldering paste according to anyone of Claims 1 to 9;
ii) applying the solder paste atop the substrate, the connection partner or both;
iii) optionally drying the solder paste
iv) contacting the substrate and the connection partner with one another so that the solder paste is at least partially arranged between the substrate and the connection partner and
v) heat-treating the substrate, the connection partner and the solder paste or combinations thereof.

## Revendications

1. Pâte à braser contenant
a) une ou plusieurs poudres métalliques pouvant être utilisée comme métal d'apport ;
b) 0,5 % en poids à 1,5 % en poids d'un ou plusieurs copolymères, qui présentent au moins un bloc styrène et au moins un bloc constitué d'éthylène, de propylène, d'isoprène, de butadiène, des équivalents hydrogénés de ces derniers ou de leurs combinaisons, qui sont des copolymères à blocs de styrène et d'isoprène ou des copolymères à blocs de styrène, d'éthylène et de propylène, et qui présentent une teneur en styrène d'au moins 30 % ;
c) 6 % en poids à 16 % en poids d'un hydrocarbure ou d'un mélange d'hydrocarbures liquide à la température ambiante ;
d) au moins un polymère supplémentaire, qui est différent du copolymère b) et est présent en des quantités allant jusqu'à 2,7 % en poids.

2. Pâte à braser selon la revendication 1, dans laquelle le copolymère b) est un copolymère tribloc du type SBS, poly(styrène-bloc-butadiène-bloc-styrène) ou SIS, poly(styrène-bloc-isoprène-bloc-styrène), ou leurs équivalents hydrogénés SEBS ou SEPS.

3. Pâte à braser selon la revendication 1 ou 2, dans laquelle l'hydrocarbure est un mélange d'alcanes, d'isoalcanes, d'alcanes cycliques ou de leurs combinaisons ayant 10 à 15 atomes de carbone.

4. Pâte à braser selon l'une des revendications 1 à 3, dans laquelle le copolymère est le SEPS (poly(styrène-bloc-isoprène-bloc-styrène)).

5. Pâte à braser selon l'une des revendications 1 à 4, dans laquelle la poudre métallique pouvant être utilisée comme métal d'apport est une poudre métallique ayant une température de fusion de 1500 °C ou moins.

6. Pâte à braser selon la revendication 1 ou 5, dans laquelle le métal de la poudre métallique est choisi dans le groupe consistant en le cuivre, l'étain, le fer, l'argent, le nickel, Ni76Cr14P10, Ni82,4Nr7Fe3Si4,5B3,1, Ni73,9Cr14Fe4,5Si4,5B3,1, Ni60Cr30Si4P6, Ni72Cr18Si8P2, Ni70,9Cr19Si10,1, Ag72Cu28, Ag56Cu22Zn17Sn5, Ag49Cu16Zn23Mn7,5Ni4,5, Ag64,8Cu25,2Ti10, Ag90Ti10, Cu80P5Ag15, Cu92P8, Cu76Sn15Ni4P5, Cu78,5Sn9,3Ni5,7P6,5 et les combinaisons de ceux-ci.

7. Pâte à braser selon la revendication 1, dans laquelle on utilise en tant que composant d), le polymère différent du composant b), des acrylates, des résines hydrocarbonées totalement ou partiellement hydrogénées, ou des polyoléfines.

8. Pâte à braser selon l'une des revendications 1 à 7, dans laquelle on utilise en tant que composant d), le polymère différent du composant b), le poly(méthacrylate de méthyle), le poly(acrylate de méthyle), le poly(méthacrylate d'éthyle), le poly(acrylate d'éthyle) EPDM, le polyisoprène, le polyisobutylène ou le polyéthylène.

9. Pâte à braser selon l'une des revendications 1 à 8, contenant des additifs et des adjuvants choisis dans le groupe consistant en les oxydants, les fondants, les composés oxygénés non volatils, les oxydes organiques, les peroxydes organiques, les polyéthers, les agents thixotropes et les combinaisons de ceux-ci.

10. Structure contenant une couche de la pâte à braser selon l'une des revendications précédentes sur un substrat.

11. Objet brasé, pouvant être obtenu par application de la pâte à braser selon la revendication 1 sur un substrat, application d'une pièce à assembler sur le substrat, la pièce à assembler faisant contact avec la pâte à braser, et traitement thermique.

12. Procédé pour le brasage d'un substrat à une pièce à assembler, comprenant les étapes suivantes :
i) fourniture d'un substrat, d'une pièce à assembler et d'une pâte à braser selon l'une des revendications 1 à 9 ;
ii) application de la pâte à braser sur le substrat, sur la pièce à assembler, ou les deux ;
iii) éventuellement, séchage de la pâte à braser
iv) mise en contact du substrat et de la pièce à assembler l'un à l'autre, de façon que la pâte à braser soit au moins partiellement disposée entre le substrat et la pièce à assembler, et
v) traitement thermique du substrat, de la pièce à assembler et de la pâte à braser ou de leurs combinaisons.
